(19) Europäisches Patentamt
European Patent Office
Office européen des brevets

(11) Numéro de publication : **0 689 031 A1**

(12) **DEMANDE DE BREVET EUROPEEN**

(21) Numéro de dépôt : **95401253.0**

(22) Date de dépôt : **30.05.95**

(51) Int. Cl.[6] : **G01B 11/02,** B60J 1/00, B05C 5/02

(30) Priorité : **24.06.94 FR 9407835**

(43) Date de publication de la demande : **27.12.95 Bulletin 95/52**

(84) Etats contractants désignés : **DE ES GB IT**

(71) Demandeur : **AUTOMOBILES PEUGEOT**
**75, Avenue de la Grande-Armée**
**F-75116 Paris (FR)**

(71) Demandeur : **AUTOMOBILES CITROEN**
**62, Boulevard Victor-Hugo**
**F-92200 Neuilly-sur-Seine (FR)**

(72) Inventeur : **Villotta, Hervé**
**6, rue Boileau,**
**Appartement 452**
**F-92140 Clamart (FR)**
Inventeur : **Loulier, Georges**
**11, rue d'Aquitaine**
**F-91850 Bouray sur Juine (FR)**

(74) Mandataire : **Thinat, Michel et al**
**Cabinet Weinstein,**
**20 Avenue de Friedland**
**F-75008 Paris (FR)**

(54) **Procédé et dispositif pour la pose d'un cordon de colle sur un panneau, tel qu'une vitre de véhicule automobile**

(57) La présente invention concerne un procédé et un dispositif pour la pose d'un cordon de colle sur un panneau.

Le dispositif, du type comprenant une buse (6) de dépose de colle (2) sur le panneau (4), est caractérisé en ce qu'il comprend en outre des moyens (1, 3) pour contrôler la hauteur du cordon (2) au fur et à mesure que celui-ci est déposé sur le panneau (4).

L'invention trouve application dans le domaine de l'automobile.

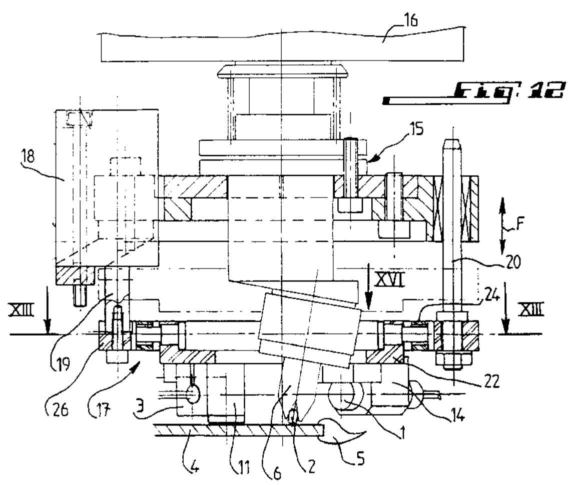


EP 0 689 031 A1

Jouve, 18, rue Saint-Denis, 75001 PARIS

La présente invention concerne un procédé pour la pose d'un cordon de colle sur un panneau, tel qu'une vitre de véhicule automobile, ainsi que le dispositif pour la mise en oeuvre de ce procédé.

Les vitres d'un véhicule automobile, telles que le pare-brise de celui-ci, sont fixées chacune à une partie de support du véhicule par un cordon de colle qui suit le pourtour de la vitre et assure en outre une fonction d'étanchéité.

Il arrive parfois que lors de la pose de cordons de colle sur des vitres, certains d'entre eux comportent des trous dont la taille peut varier fortement : de quelques millimètres à environ un mètre. De tels trous nuisent à l'étanchéité des vitres telles que les pare-brise des véhicules automobiles.

Actuellement, ces défauts d'étanchéité ne sont détectés qu'en fin de chaîne de production de sorte qu'il est nécessaire de décoller la vitre pour la recoller avec un nouveau cordon de colle. De plus, compte tenu de la vitesse d'encollage relativement élevée et du temps de dépose relativement court du cordon de colle pouvant varier respectivement de 12 m/mn à 25 m/mn et de 10 à 20 s, les installations d'encollage ne disposent généralement pas du temps, ni d'ailleurs de la place nécessaires pour effectuer un contrôle des défauts d'étanchéité après dépose du cordon de colle.

La présente invention a pour but d'éliminer les inconvénients ci-dessus des procédés connus de dépose de cordons de colle sur des vitres de véhicules automobiles.

A cet effet, l'invention propose un procédé pour la pose d'un cordon de colle sur un panneau, tel qu'une vitre de véhicule automobile, selon lequel le cordon est déposé par une buse ou analogue mobile par rapport à la vitre, et qui est caractérisé en ce qu'il consiste à contrôler la hauteur du cordon de colle au fur et à mesure que celui-ci est déposé.

L'étape de contrôle de hauteur du cordon de colle est effectuée en envoyant un faisceau lumineux, tel qu'un faisceau laser, sur le cordon à une hauteur égale à une hauteur minimale prédéterminée et en vérifiant si le faisceau est arrêté ou non par le cordon.

Cette étape de contrôle est effectuée à l'aide d'un récepteur optique recevant le faisceau lumineux issu d'un émetteur et on vérifie le fonctionnement du récepteur après chaque dépose d'un cordon de colle.

L'invention concerne de plus un procédé de contrôle de la hauteur d'un cordon de colle sur un panneau, tel qu'une vitre de véhicule automobile, et qui est caractérisé en ce qu'il consiste à envoyer un faisceau lumineux, tel qu'un faisceau laser, sur le cordon à une hauteur égale à une hauteur minimale prédéterminée et à vérifier si le faisceau est arrêté ou non par le cordon.

L'invention propose également un dispositif pour la pose d'un cordon de colle sur un panneau tel qu'une vitre de véhicule automobile, comprenant une buse et des moyens de déplacement relatif de celle-ci et de la vitre, et qui est caractérisé en ce qu'il comprend en outre des moyens pour contrôler la hauteur du cordon au fur et à mesure que celui-ci est déposé.

Les moyens de contrôle de la hauteur du cordon de colle comprennent une cellule optique comprenant un émetteur placé d'un côté du cordon et envoyant un faisceau lumineux sur celui-ci et un récepteur placé de l'autre côté du cordon de manière à recevoir le faisceau en l'absence de colle ; et des moyens de commande et de contrôle reliés à l'émetteur et au récepteur.

Avantageusement, la partie des moyens de contrôle située à l'intérieur du cordon et comprenant au moins l'émetteur ou le récepteur, se trouve dans une zone d'absence de contact physique avec le cordon de colle même lors du déplacement de la buse pour déposer un cordon de colle courbe et délimitée d'une part par un cercle de même rayon que celui de la plus forte courbure du cordon à déposer et situé tangentiellement au cordon à la hauteur de la buse et d'autre part par l'espace compris entre les perpendiculaires aux rayons de ce cercle écartés chacun de l'angle de courbure de la perpendiculaire au cordon.

De préférence, l'axe optique de la cellule passe par le centre de rotation du cordon lorsque la buse aborde les parties courbes de celui-ci.

Dans le cas où la vitre est équipée d'un enjoliveur présentant des oreilles à certains endroits, le dispositif comprend également des moyens pour rabattre ces oreilles lorsque les moyens de contrôle arrivent à leur niveau.

Selon un mode de réalisation préféré, le dispositif comprend une première partie comportant la buse ; une deuxième partie mobile par rapport à la première et portant les moyens de contrôle de la hauteur du cordon comprenant au moins l'émetteur et le récepteur précités; et des moyens pour appliquer la deuxième partie mobile sur la vitre.

Les moyens pour appliquer la deuxième partie mobile sur la vitre comprennent un ressort ou analogue interposé entre les première et deuxième parties.

Selon une variante de réalisation, les moyens pour appliquer la deuxième partie mobile sur la vitre comprennent un vérin monté entre les première et deuxième parties.

Selon une autre variante de réalisation, la deuxième partie est appliquée sur la vitre par son propre poids.

De préférence, la deuxième partie mobile comprend un patin contactant en permanence la face intérieure

de la vitre sur laquelle est déposé le cordon de colle et servant de moyen de référence de la hauteur du capteur relativement à la vitre.

Avantageusement, l'émetteur et le récepteur sont montés sur la deuxième partie mobile par l'intermédiaire d'un mécanisme à cardan.

Les moyens de commande ou de contrôle comprennent un circuit élargisseur d'impulsion recevant les signaux du récepteur et un circuit d'interface recevant les signaux du circuit élargisseur pour les transmettre à un automate programmable.

Les moyens de commande et de contrôle comprennent en outre un trigger de Schmidt interposé entre le récepteur et le circuit élargisseur d'impulsion.

Les moyens de commande et de contrôle comprennent également une mémoire interposée entre le circuit élargisseur d'impulsion et le circuit d'interface précité.

Le circuit d'interface est relié à l'automate programmable par deux sorties complémentées de façon que l'automate programmable vérifie le fonctionnement correct du circuit d'interface et la conformité du câblage.

L'invention propose également un dispositif de contrôle de la hauteur d'un cordon de colle sur un panneau, tel qu'une vitre de véhicule automobile, et qui caractérisé en ce qu'il comprend les moyens de contrôle de la hauteur du cordon de colle tels que définis précédemment.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels.

La figure 1 représente le schéma de principe du procédé de pose d'un cordon de colle conforme à l'invention.

La figure 2 définit une zone d'absence de contact entre le cordon de colle et une partie des moyens de contrôle de celui-ci située à l'intérieur du cordon.

La figure 3 représente la variation de l'angle d'un capteur des moyens de contrôle à l'intérieur du cordon par rapport au cordon en fonction de la courbure de ce dernier.

La figure 4 est une vue explicative relative à un angle minimum d'incidence entre le faisceau du capteur et le cordon de colle.

La figure 5 représente schématiquement la dépose d'un cordon de colle par une buse sur une vitre associée à un enjoliveur l'entourant.

Les figures 6A et 6B montrent l'influence du rayon de courbure d'une vitre sur la précision de mesure de hauteur du cordon de colle.

La figure 7 est une vue géométrique permettant de déterminer la relation entre la hauteur du point d'impact d'un faisceau lumineux sur le cordon et le rayon de courbure de la vitre.

La figure 8 est un graphique représentant l'erreur sur la hauteur du point d'impact par rapport à une vitre plate en fonction du rayon de courbure de la vitre.

La figure 9 est une vue schématique permettant de montrer l'influence de l'orientation du capteur par rapport au cordon de colle et du diamètre du faisceau lumineux sur la longueur minimale du trou ou défaut pour que le faisceau puisse traverser celui-ci.

La figure 10 est une vue schématique du dispositif de dépose d'un cordon de colle sur une vitre conforme à l'invention.

La figure 11 est une vue schématique de dessus suivant la flèche XI de la figure 10.

La figure 12 est une vue en coupe en élévation du dispositif de dépose de l'invention suivant un premier mode de réalisation.

La figure 13 est une vue en coupe suivant la ligne XIII-XIII de la figure 12.

La figure 14 est une vue en coupe en élévation du dispositif de dépose du cordon de colle suivant un second mode de réalisation de l'invention.

La figure 15 est une vue en coupe en élévation du dispositif de dépose d'un cordon de colle suivant un troisième mode de réalisation.

La figure 16 est une vue de dessus suivant la flèche XVI de la figure 12 et représentant uniquement l'implantation de l'émetteur et du récepteur faisant partie des moyens de contrôle de hauteur du cordon de colle du dispositif de l'invention.

La figure 17 est une vue en coupe suivant la ligne XVII-XVII de la figure 16.

La figure 18 est une vue en coupe suivant la ligne XVIII-XVIII de la figure 16.

La figure 19 est un schéma électronique de traitement des signaux issus du capteur de contrôle de hauteur du cordon de colle.

Le procédé et le dispositif de l'invention vont être décrits en référence à la pose d'un cordon de colle sur une vitre d'un véhicule automobile, mais il est bien entendu qu'ils peuvent s'appliquer également à la pose

d'un cordon de colle sur tout autre panneau, plat ou courbé, pour la détection de défauts que peut présenter le cordon de colle.

Le procédé de l'invention pour la pose d'un cordon de colle sur une vitre de véhicule automobile consiste à contrôler la hauteur du cordon de colle au fur et à mesure que celui-ci est déposé sur la vitre.

La figure 1 montre schématiquement la façon dont on contrôle la hauteur du cordon.

Ainsi, on utilise un moyen capteur ou cellule optique de mesure comprenant un émetteur 1 d'un faisceau lumineux, tel qu'un faisceau laser collimaté, situé d'un côté du cordon 2 à déposer et un récepteur 3 du faisceau lumineux provenant de l'émetteur et situé de l'autre côté du cordon 2. L'émetteur 1 envoie le faisceau lumineux sur le cordon 2 à une hauteur égale à une hauteur minimale prédéterminée de façon à détecter non seulement des trous dans le cordon 2, mais également toute insuffisance de hauteur du cordon 2. Il suffit pour cela de régler la cellule de mesure à la bonne hauteur relativement à la vitre.

L'emploi d'un faisceau laser collimaté est préférable pour détecter la hauteur du cordon déposé 2 car il a pour avantages que le point d'impact du faisceau sur le cordon 2 est très petit, ce qui facilite le réglage visuel du moyen capteur et réduit la taille du défaut ou du trou minimum détectable, et le taux de lumière reçu par le récepteur 3 est relativement important par rapport à la lumière ambiante, conduisant ainsi à un étage de réception simplifié et à un temps de réponse plus rapide comme on le verra ultérieurement.

La disposition de l'émetteur 1 et du récepteur 3 de part et d'autre du cordon 2 est préférable à celle où l'émetteur et le récepteur seraient situés d'un même côté du cordon, afin de s'affranchir de l'état de surface du cordon (couleur, brillance, ondulations), susceptible de rendre la mesure impossible.

La cellule optique de mesure fonctionne de ce fait en logique ou sécurité négative, c'est-à-dire que l'absence de signal de sortie du récepteur 3 de la cellule sera considérée comme signifiant que le cordon déposé ne présente pas de défaut. Dans ces conditions, il est nécessaire de vérifier le fonctionnement correct de la cellule de mesure entre deux déposes consécutives de cordons de colle sur deux vitres différentes. Cette vérification est effectuée par un circuit électronique qui sera détaillé ultérieurement.

L'émetteur 1 et le récepteur 3 de la cellule de mesure sont entraînés en translation avec une buse de dépose du cordon de colle 2, connue en soi, de la manière qui sera décrite en référence aux figures 12 à 18.

Mais avant de décrire en détail le dispositif représenté aux figures 12 à 18 pour la pose d'un cordon de colle sur une vitre, il est important de montrer comment les différentes contraintes liées à l'emploi de l'émetteur 1 et du récepteur 3 situés de part et d'autre du cordon de colle 2 à déposer ont été surmontées.

En effet, la disposition de l'émetteur et du récepteur de la cellule de mesure entraîne des contraintes sur la géométrie de la partie, c'est-à-dire l'émetteur ou le récepteur, se trouvant à l'intérieur de la zone délimitée par le cordon de colle 2 et cette partie ne doit en aucun cas entrer en collision avec le cordon de colle.

Ces contraintes vont être analysées ci-dessous.

Tout d'abord, dans la mesure où l'émetteur et le récepteur de la cellule de mesure utilisent respectivement les deux faces latérales du cordon de colle déposé 2, ces deux faces doivent être toutes les deux accessibles. Or, comme représenté en figure 5, dans le cas d'une vitre 4 constituée par un pare-brise de véhicule automobile, un enjoliveur 5 en caoutchouc noir est monté autour du pare-brise 4 avant la dépose du cordon de colle 2 et peut cacher en partie le cordon de colle déposé. Dans certaines zones, l'enjoliveur 5 peut être plus haut que le cordon de colle 2 et le cacher complètement. Ces zones sont constituées par des oreilles ou surlargeurs de l'enjoliveur nécessaires à certains endroits, par exemple, dans certains coins arrondis du pare-brise. Dans ces conditions, il est nécessaire d'utiliser un moyen mécanique, qui sera défini en référence aux figures 12 à 18, destiné à rabattre, lors de la pose du cordon de colle, les oreilles de l'enjoliveur aux emplacements où elles cachent le cordon de colle 2.

De plus, l'émetteur 1 ou le récepteur 3 de la cellule de mesure situé à l'intérieur du cordon de colle 2, lors de son déplacement avec la buse de dépose, est susceptible d'entrer en contact avec le cordon de colle, notamment lors des rotations de la buse pour réaliser une portion courbe du cordon.

Il est donc nécessaire de déterminer une zone dans laquelle un tel contact n'aura jamais lieu.

Comme représenté en figure 2, cette zone, dite d'absence de contact avec le cordon de colle 2, dépend de deux données comprenant le rayon intérieur Rmin du cordon 2 sur sa zone de plus forte courbure et l'angle $\alpha$ sur lequel le cordon 2 est courbé. La figure 2 montre une partie foncée de cordon 2 déjà déposé et une partie moins foncée de cordon 2 à déposer. Ainsi, la zone d'absence de contact Z est délimitée d'une part par un cercle C de même rayon Rmin que celui de la plus forte courbure du cordon 2 et situé tangentiellement au cordon 2 à la hauteur de la buse 6 et d'autre part par l'espace E compris entre les perpendiculaires P aux rayons de ce cercle écartés de l'angle de courbure $\alpha$ de la perpendiculaire au cordon 2.

La figure 3 montre la variation de l'angle du faisceau F de la cellule de mesure par rapport au cordon 2 en fonction de la courbure du cordon. Si l'on considère $\theta$ comme étant l'angle d'incidence du faisceau F de la cellule de mesure par rapport au cordon 2 et que la cellule de mesure est liée en rotation à la buse 6, l'angle $\theta$ ne peut varier que dans l'intervalle $[\theta_d, \theta_d + \alpha_c]$, où $\theta_d$ est l'angle de départ entre le faisceau F et le cordon 2

et $\alpha_c$ est l'angle de courbure du cordon 2, c'est-à-dire qu'il correspond à la rotation de la buse 6 pour réaliser la partie courbée du cordon 2.

Si le faisceau F de la cellule de mesure passe par le centre de rotation CR du cordon 2, dès que la buse 6 a tourné d'un angle $\theta_d$, le faisceau F rencontre la partie circulaire de ce cordon. Comme ce faisceau passe par le centre de rotation CR, son angle d'incidence par rapport au cordon 2 est alors constant et égal à 90° comme indiqué par la zone Z1. Dans ce cas, l'angle maximum d'incidence entre le faisceau F et le cordon 2 est donc le minimum des deux angles de 90° et de $\theta_d + \alpha_c$.

L'explication qui précède montre tout l'intérêt qu'il y a à faire passer l'axe optique de la cellule de mesure par le centre de rotation du cordon 2.

Une autre contrainte est le respect important d'un angle minimum d'incidence entre le faisceau F de la cellule de mesure et le cordon de colle 2. Cet angle minimum d'incidence conditionne la taille minimum du trou à détecter en fonction de la largeur du cordon 2 à l'endroit de l'impact du faisceau F et du diamètre de ce faisceau comme cela sera démontré ultérieurement. En se reportant à la figure 4, $\theta_d$ est l'angle d'incidence entre le cordon 2 et le faisceau F de la cellule de mesure pour les portions droites du cordon et $\theta_f$ est l'angle d'incidence maximal entre le cordon 2 et le faisceau F dû aux courbures du cordon 2. En fait, l'angle d'incidence maximal est $\theta_d + \alpha_c$, mais l'angle $\theta$ f joue le même rôle que $\theta_d$ par raison de symétrie.

Si on veut assurer que ni $\theta_d$, ni $\theta_f$ ne soit jamais inférieur à une valeur minimale $\theta_{min}$, on doit avoir la relation :

$$\begin{cases} \theta_d \geq \theta_{min} \\ \theta_d + \alpha_c \leq 180° - \theta_{min} \end{cases}$$

Si par ailleurs, on veut assurer une symétrie entre $\theta_d$ et $\theta_f$, on doit avoir $\theta_d = \theta_{min}$. On doit alors avoir :

$$\theta_{min} \leqq \frac{180° - \alpha_c}{2}$$

Par ailleurs, il se pose le problème de référencement de la cellule de mesure lors de la dépose du cordon de colle. Lors de cette dépose, la buse 6 suit théoriquement le galbe de la vitre 4. On pourrait donc supposer qu'il suffit que la cellule de mesure soit référencée par rapport à la buse 6 pour qu'elle le soit par rapport à la vitre 4. En pratique, les défauts de galbe de la vitre, la différence de galbe d'une classe à l'autre de la vitre (claire ou teintée) et l'approximation de la trajectoire de dépose du cordon rendent cette référence inadéquate. La référence doit donc être prise sur la vitre elle-même et dans la mesure où le cordon de colle 2 repose sur la face intérieure 4a de la vitre 4 (figure 5), c'est cette face 4a qui servira de référence pour le contrôle de la hauteur du cordon de colle 2.

De plus, pour limiter les erreurs de contrôle ou de mesure de hauteur du cordon de colle, il est nécessaire de s'assurer que l'axe optique de la cellule de mesure reste parallèle à la vitre à l'endroit de la mesure, c'est-à-dire à l'endroit où le faisceau de l'émetteur frappe le cordon de colle. Or, les vitres de véhicules automobiles comportent des zones courbes ou galbes comme on l'a déjà vu précédemment, de sorte que l'orientation de la cellule de mesure doit suivre le galbe de la vitre sur laquelle est déposé le cordon de colle. Un moyen permettant d'effectuer une telle orientation sera défini lors de la description du dispositif de pose du cordon de colle.

Il est également important de mettre en relief l'influence du rayon de courbure de la vitre sur la précision de contrôle de la cellule et ce en référence aux figures 6A, 6B et 7, 8.

En effet, l'axe optique de la cellule de mesure étant parallèle à la vitre 4 au niveau de la cellule, si la vitre était plane, la hauteur entre la base de la cellule de mesure et son axe optique donnerait la hauteur de détection des défauts.

Or, les vitres sont généralement galbées, les rayons de courbure pouvant aller par exemple d'environ 900 mm à environ 3150 mm pour le pare-brise d'un certain modèle de véhicule. La courbure de la vitre introduit alors une erreur sur la hauteur du point d'impact du faisceau F sur le cordon de colle 2.

En se reportant plus particulièrement à la figure 7, si l'on considère R comme étant le rayon de courbure de la vitre 4, h la hauteur de la cellule de mesure au niveau de son axe optique, h' la hauteur du point d'impact du faisceau F sur le cordon 2 et d la distance entre le centre du bas du cordon et de la cellule de mesure, on obtient les relations suivantes :

$$\begin{cases} \dfrac{R-h}{R-h'} = \cos(\alpha) = 2\cos^2\left(\dfrac{\alpha}{2}\right) - 1 \\ \cos\left(\dfrac{\alpha}{2}\right) = \dfrac{d}{2R} \end{cases} \Rightarrow \frac{R-h}{R-h'} = \frac{2d^2}{4R^2} - 1$$

De ces relations, on en déduit :

$$h' = \frac{R(2hR - d^2)}{2R^2 - d^2}$$

Le graphique de la figure 8 donne l'erreur e sur la hauteur h' par rapport à une vitre plate pour quatre rayons différents de courbure d'un pare-brise d'un véhicule automobile en fonction de la distance d séparant le centre du pied de la cellule de mesure et celui du cordon, la cellule de mesure étant placée à 10 mm de la vitre et l'axe optique de la cellule de mesure étant parallèle à la vitre au niveau de la cellule.

La dernière contrainte à étudier résultant de la disposition de l'émetteur et du récepteur de la cellule de mesure concerne la taille minimum des défauts ou trous détectables par la cellule de mesure.

Comme on va le démontrer ci-dessous, cette taille minimum est la somme de trois longueurs dues aux trois causes suivantes :

- l'orientation de la cellule de mesure et le diamètre du faisceau de celle-ci,
- le temps de réponse de la cellule de mesure, et
- le temps de réponse d'un automate programmable qui traite les défauts rencontrés dans le cordon de colle déposé.

La figure 9 permet de comprendre l'influence de l'orientation du faisceau F de la cellule de mesure par rapport au cordon 2 et du diamètre du faisceau F.

Sur cette figure, θ représente l'angle du faisceau F par rapport au cordon 2, lc est la largeur du cordon 2, lt est la longueur du trou à détecter et df est le diamètre utile du faisceau lumineux F.

Pour que le faisceau F puisse traverser le trou 2a du cordon 2, il faut que ce trou ait une longueur minimale de :

$$lt_{min} = \frac{lc}{tg(\theta)} + \frac{df}{\sin(\theta)} = \frac{(lc \times \cos(\theta)) + df}{\sin(\theta)}$$

Comme cela ressort de l'expression ci-dessus, plus le faisceau F est couché sur le cordon ou plus le diamètre de ce faisceau ou la largeur du cordon sont grands et plus le trou minimum détectable sera grand.

Le temps de réponse du capteur est le temps minimum que doit durer le défaut pour que la cellule de mesure ait le temps de produire un signal d'information. Ce temps dépend du traitement interne du signal reçu par le récepteur (reconnaissance d'une fréquence porteuse, filtrage, etc...).

La taille du défaut correspondant est donnée par la formule :

$$L_c = V_d \times T_{rc}$$

dans laquelle $L_c$ est la taille du défaut en mm, $V_d$ est la vitesse de dépose du cordon de colle en m/s et $T_{rc}$ le temps de réponse de la cellule de mesure en ms.

Le temps de réponse de l'automate programmable va être défini comme suit. Cet automate scrute cycliquement ses entrées. Pour être sûr qu'un signal coïncidera avec une scrutation de l'entrée sur laquelle il est présent, il faut que ce signal dure au moins un temps de cycle de l'automate.

Par ailleurs, ce signal doit être présent sur l'entrée un temps minimum (temps de maintien) pour être pris en compte par l'automate.

Le temps minimum que doit donc durer un signal pour être pris en compte par l'automate est donné par la formule suivante :

$$T_{ra} = T_{ca} + T_{ma}$$

où $T_{ra}$ est le temps minimum ou temps de réponse de l'automate, $T_{ca}$ le temps de cycle de l'automate et $T_{ma}$ le temps de maintien sur ces entrées.

La taille du défaut correspondant au temps de réponse de l'automate est donnée par la formule :

$$L_a = V_d \times T_{ra} = V_d \times (T_{ca} + T_{ma})$$

dans laquelle $L_a$ est la taille du défaut en mm, $V_d$ la vitesse de dépose du cordon de colle en m/s et $T_{ra}$ le temps de réponse de l'automate en ms.

Le temps de réponse de l'automate, en association avec la vitesse de dépose, est prépondérant dans le calcul de la longueur minimum de détection des défauts présents dans le cordon de colle.

Pour une cellule de mesure du commerce, la longueur minimum des défauts détectables à coup sûr est donnée par la somme des tailles ou longueurs définies précédemment $lt_{min}$, $L_c$ et $L_a$, soit

$$L_{min} = lt_{min} + L_c + L_a = \frac{(l_c \times \cos(\theta)) + dr}{\sin(\theta)} + V_d x (T_{rc} + T_{ca} + T_{ma})$$

où $L_{min}$ est la longueur minimum en mm, lc est la largeur du cordon en mm au point d'impact du faisceau F, θ l'angle d'incidence en degrés du faisceau F par rapport au cordon 2, dr le diamètre en mm du faisceau F, $V_d$ la vitesse de dépose de la colle en m/s, $T_{rc}$ le temps de réponse du capteur en ms, $T_{ca}$ le temps de cycle ou de boucle de l'automate en ms et $T_{ma}$ le temps de maintien sur ces entrées en ms.

De par la conception du circuit de contrôle et de commande relié à l'émetteur et au récepteur de la cellule de mesure et représenté en figure 19, la formule ci-dessus peut se réduire à :

$$L_{min} = lt_{min} + L_c = \frac{(l_c \times \cos(\theta)) + dr}{\sin(\theta)} + (V_d \times T_{rc})$$

Le circuit de contrôle et de commande représenté en figure 19 comprend un circuit trigger de Schmidt TS interposé entre le récepteur 3 et un élargisseur d'impulsion EI. Le trigger de Schmidt qui, comme cela est connu, présente un phénomène d'hystérésis, possède deux seuils fixes de déclenchement et a ainsi pour but de fournir un seuil à partir duquel on estime avoir reçu le faisceau laser de contrôle et de donner des changements d'état ou de niveaux francs et sans rebond. L'élargisseur d'impulsion EI permet de s'affranchir des temps de réponse et de maintien de l'automate tout en minimisant le câblage (une seule sortie et pas d'entrée). Le circuit de commande et de contrôle comprend également une mémoire M interposée entre l'élargisseur d'impulsion EI et un circuit d'interface industriel CI. Le circuit d'interface CI reçoit ainsi les signaux de la cellule de mesure pour les transmettre à l'automate programmable AP. La mémoire M permet d'accroître la sécurité en gardant le défaut présent à l'entrée du circuit d'interface tant que l'automate programmable ne l'a pas acquitté mais la présence de cette mémoire nécessite un câblage supplémentaire, à savoir une sortie et une entrée supplémentaires.

Le circuit d'interface CI fournit à l'automate programmable AP deux sorties complémentées permettant l'auto-vérification du câblage par l'automate programmable. Le circuit d'interface est relié à un commutateur CO qui, sous la commande de l'automate programmable, permet de court-circuiter la mémoire M et donc d'appliquer la sortie de l'élargisseur d'impulsion EI directement à l'entrée correspondante du circuit d'interface CI.

Le circuit de commande et de contrôle comprend un circuit de validation/inhibition VI permettant, par l'intermédiaire de l'automate programmable et du circuit d'interface, de valider ou d'inhiber l'élargisseur d'impulsion et l'émetteur 1 constitué par une diode laser collimatée, le récepteur 3 étant alors un photo-récepteur. En n'autorisant l'émission du faisceau laser qu'au moment où cela est nécessaire (contrôle du capteur et phase de dépose du cordon), la commande validation-inhibition permet de prolonger la durée de vie du capteur et d'améliorer la sécurité en diminuant les risques d'exposition d'un opérateur éventuel au faisceau.

Les sorties complémentées du circuit d'interface peuvent être réalisées comme décrit dans le document FR-A-2 696 556 appartenant aux demanderesses et incorporé à titre de référence dans la présente demande. Brièvement, ce document antérieur décrit, en référence notamment à la figure 4 de celui-ci, la possibilité à un automate programmable de contrôler les états complémentaires de sortie d'un capteur. En appliquant ce circuit à la présente invention, l'automate programmable AP, par simple contrôle des sorties complémentées du circuit interface CI peut vérifier le bon fonctionnement de ce circuit ainsi que la conformité du câblage. La présence du faisceau, quant à elle, est vérifiée en faisant une mesure en dehors de la zone de dépose du cordon : à cet endroit, la cellule doit indiquer un défaut, car il n'y a pas de cordon.

Les figures 10 et 11 représentent schématiquement le principe de fonctionnement du dispositif de dépose d'un cordon 2 sur une vitre.

Ce dispositif comprend une partie mobile en translation 10 comportant la buse 6 de dépose du cordon de colle 2, ce dernier pouvant présenter une section transversale de forme triangulaire, par exemple de l'ordre de 7 mm de base et de 14 mm de haut.

La partie 10 comporte également un patin 11 appliqué en permanence sur la face intérieure de la vitre par l'intermédiaire d'un ressort 12 de façon à permettre à la cellule de mesure de se référencer par rapport à cette face intérieure et ainsi d'ajuster le point de mesure sur le cordon 2. La force appliquée par le ressort 12 au patin pivotant 11 permet de s'affranchir du galbe de la vitre du fait que le patin 11 est toujours en contact avec celle-ci. Cependant, comme on le verra plus loin, cette force peut être due à un vérin ou au propre poids de l'ensemble.

Le photo-récepteur 3 est mécaniquement couplé à un mécanisme à rotule 13 permettant de minimiser les effets de la courbure de la vitre avec l'axe optique de la cellule de mesure parallèle à la vitre au niveau de la cellule.

Bien entendu, la diode laser 1 et le photo-récepteur 3 sont mécaniquement couplés à la partie 10 de façon à être situés de part et d'autre du cordon de colle à contrôler. Dans le cas présent, c'est le photo-récepteur qui est placé à l'intérieur du cordon 2 et il n'entre jamais en contact avec celui-ci dès l'instant où il se trouve

dans la zone Z définie précédemment. La partie 14 recevant la diode laser 1 est agencée pour rabattre les oreilles de l'enjoliveur 5 de façon à permettre la mesure dans les coins du pare-brise 4.

Comme le montre la figure 11, le faisceau F est placé en biais derrière la buse 6 et permet de vérifier le bon fonctionnement de la cellule de mesure malgré la queue de colle 2.

Le mode de réalisation du dispositif de pose d'un cordon de colle tel que représenté aux figures 12 et 13 comprend une première partie 15 comportant la buse 6 et solidaire d'un moyen 16 d'entraînement en translation de la partie 15 pour effectuer la dépose du cordon de colle. Ce moyen d'entraînement peut être constitué par un robot.

Le dispositif comprend de plus une deuxième partie 17 mobile par rapport à la première partie 15 dans la direction indiquée par la double flèche F de façon à déplacer la partie 17 vers ou hors de la vitre 4. A cet effet, un vérin 18 a son corps solidaire de la partie 15 et sa tige de commande 19 solidaire de la partie mobile 17 tandis que cette dernière comporte à l'opposé de la tige 19 et parallèlement à celle-ci une tige de guidage 20 coulissant à travers la partie 15.

La partie mobile 17 porte l'émetteur 1 et le récepteur 3 ainsi que le patin 11.

Ainsi, le vérin 18 permet le déplacement de la buse 6 vers la vitre 4 jusqu'à ce que le patin 11 soit appliqué sur la face interne de la vitre 4.

L'émetteur 1 est logé dans la partie 14 servant de moyen de rabat des oreilles de l'enjoliveur 5 et fixée à la partie mobile 17.

Comme le montre plus clairement la figure 13, l'émetteur 1 et le récepteur 3 sont fixés aux endroits portant les références 21, par exemple par des vis de fixation, à une plaque de support circulaire 22 articulée par deux axes d'articulation séparés coaxiaux 23 sur une autre plaque circulaire concentrique 24 elle-même articulée autour de deux axes séparés coaxiaux 25 sur une plaque externe 26 de la partie mobile 15.

On comprend ainsi que l'émetteur 1 et le récepteur 3 sont montés sur la deuxième partie 17 par l'intermédiaire d'un mécanisme à cardan. Dans ce cas, c'est la conjugaison de la force verticale exercée, du patin de contre-réaction 11 et du mécanisme à cardan qui permet de s'affranchir des courbures de la vitre.

Le dispositif de la figure 14 diffère de celui des figures 12 et 13 par le fait que la partie mobile est constituée par une plaque unique 27 à laquelle sont fixés l'émetteur 1 et le récepteur 3 et par le remplacement du vérin 18 par un ressort 12 interposé entre la partie 15 et la partie mobile 17 de façon à appliquer le patin 11 en contact frottant sur la vitre 4.

Le dispositif de la figure 15 est semblable à celui de la figure 14 en reprenant le vérin de commande 18 à la place du ressort 12.

L'utilisation d'un ressort permet de simplifier le câblage et la commande tandis que le vérin permet d'une part d'avoir une pression constante et d'autre part de pouvoir relever l'ensemble en automatique.

Enfin, dans un dernier mode de réalisation, l'ensemble mobile est appliqué par son propre poids sur la vitre.

Il est à noter que, dans tous les cas, il est important de pouvoir relever l'ensemble mobile afin de nettoyer la buse ou de la tremper dans un produit empêchant la polymérisation de la colle en cas de pause prolongée. On remarquera encore que, dans les variantes des figures 12 à 15 la partie mobile n'est pas articulée sur la partie fixe. Si l'on utilise une articulation, comme représenté schématiquement sur la figure 10, le point d'appui doit se trouver à la verticale du point d'articulation et le patin doit être choisi suffisamment grand pour éviter le basculement du capteur.

Les figures 16 à 18 montrent plus clairement la façon dont l'émetteur 1 et le récepteur 3 sont fixés à la plaque de support 27 de la partie mobile 17 par des vis de fixation 28 par l'intermédiaire d'un bloc de support 29 pour le récepteur 3 et de la partie de support 14 pour l'émetteur 1.

Bien entendu, le circuit de contrôle et de commande tel que représenté en figure 19 peut être également fixé à la partie mobile 17 et relié par un câblage à l'automate programmable extérieur.

## Revendications

1. Procédé pour la pose d'un cordon de colle (2) sur un panneau (4) tel qu'une vitre de véhicule automobile, selon lequel le cordon (2) est déposé par une buse ou analogue (6) mobile par rapport à la vitre (4), et consistant à contrôler la hauteur du cordon de colle (2) au fur et à mesure que celui-ci est déposé, caractérisé en ce que le contrôle est effectué en envoyant un faisceau lumineux (F), tel qu'un faisceau laser, sur le cordon (2) à une hauteur égale à une hauteur minimale prédéterminée et en vérifiant si le faisceau (F) est arrêté ou non par le cordon (2).

2. Procédé selon la revendication 1, caractérisé en ce que le contrôle est effectué à l'aide d'un récepteur

optique (3) recevant le faisceau issu d'un émetteur (1) et en ce qu'il consiste à vérifier le fonctionnement du récepteur (3) après chaque dépose d'un cordon de colle (2).

**3.** Utilisation de l'étape de contrôle définie dans la revendication 1 ou 2 dans un procédé de contrôle de la hauteur d'un cordon de colle sur un panneau, tel qu'une vitre de véhicule automobile.

**4.** Dispositif pour la pose d'un cordon de colle (2) sur un panneau (4) tel qu'une vitre de véhicule automobile, comprenant une buse (6), des moyens de déplacement relatif de celle-ci et de la vitre (4), et des moyens (1, 3) pour contrôler la hauteur du cordon (2) au fur et à mesure que celui-ci est déposé, caractérisé en ce que les moyens pour contrôler la hauteur du cordon de colle (2) comprennent une cellule comprenant un émetteur (1) placé d'un côté du cordon (2) et envoyant un faisceau lumineux (F) sur celui-ci et un récepteur (3) placé de l'autre côté du cordon (2) de manière à recevoir le faisceau (F) en l'absence de colle (2) ; et des moyens de commande et de contrôle reliés à l'émetteur (1) et au récepteur (3).

**5.** Dispositif selon la revendication 4, caractérisé en ce que la partie des moyens de contrôle située à l'intérieur du cordon et comprenant au moins l'émetteur (1) ou le récepteur (3), se trouve dans une zone d'absence de contact physique avec le cordon de colle (2) même lors du déplacement de la buse (6) pour déposer un cordon de colle courbe (2) et délimitée d'une part par un cercle de même rayon que celui de la plus forte courbure du cordon à déposer (2) et situé tangentiellement au cordon (2) à la hauteur de la buse (6) et d'autre part par l'espace compris entre les perpendiculaires aux rayons de ce cercle écartés chacun de l'angle de courbure de la perpendiculaire au cordon.

**6.** Dispositif selon la revendication 4 ou 5, caractérisé en ce que l'axe optique de la cellule (1, 3) passe par le centre de rotation du cordon (2) lorsque la buse (6) aborde les parties courbes de celui-ci.

**7.** Dispositif selon l'une des revendications 4 à 6, où la vitre (4) est équipée d'un enjoliveur (5) présentant des oreilles à certains endroits, caractérisé en ce qu'il comprend des moyens (14) pour rabattre celles-ci lorsque le moyen de contrôle arrive à leur niveau.

**8.** Dispositif selon l'une des revendications 4 à 7, caractérisé en ce qu'il comprend :
- une première partie (15) comportant la buse (6) ;
- une deuxième partie (17) mobile par rapport à la première partie (15) et portant les moyens de contrôle de la hauteur du cordon (2) comprenant au moins l'émetteur (1) et le récepteur (3) précités ; et
- des moyens (12 ; 18) pour appliquer la deuxième partie mobile (17) sur la vitre (4).

**9.** Dispositif selon la revendication 8, caractérisé en ce que les moyens précités pour appliquer la deuxième partie mobile (17) sur la vitre (4) comprennent un ressort ou analogue (12) interposé entre les première et deuxième parties (15, 17).

**10.** Dispositif selon la revendication 8, caractérisé en ce que les moyens pour appliquer la deuxième partie mobile (17) sur la vitre (4) comprennent un vérin (18) monté entre les première et deuxième parties (15, 17).

**11.** Dispositif selon la revendication 8, caractérisé en ce que la deuxième partie (17) est appliquée sur la vitre (4) par son propre poids.

**12.** Dispositif selon l'une des revendications 8 à 11, caractérisé en ce que la deuxième partie mobile (17) comprend un patin (11) contactant en permanence la face intérieure de la vitre (4) sur laquelle est déposé le cordon de colle (2) et servant de moyen de référence de la hauteur de la cellule relativement à la vitre (4).

**13.** Dispositif selon l'une des revendications 8 à 12, caractérisé en ce que l'émetteur (1) et le récepteur (3) sont montés sur la deuxième partie mobile (17) par l'intermédiaire d'un mécanisme à cardan (22, 23, 24, 25).

**14.** Dispositif selon l'une des revendications 4 à 13, caractérisé en ce que les moyens de commande et de contrôle précités comprennent :
- un circuit élargisseur d'impulsion (EI) recevant les signaux du récepteur (3) ;
- un circuit d'interface (CI) recevant les signaux du récepteur (3) pour les transmettre à un automate programmable (AP).

15. Dispositif selon la revendication 14, caractérisé en ce que les moyens de commande et de contrôle comprennent en outre un trigger de Schmidt (TS) interposé entre le récepteur (3) et le circuit élargisseur d'impulsion (EI).

16. Dispositif selon la revendication 14 ou 15, caractérisé en ce que les moyens de commande et de contrôle comprennent en outre une mémoire (M) interposée entre le circuit élargisseur d'impulsion (EI) et le circuit d'interface (CI).

17. Dispositif selon la revendication 14, caractérisé en ce que le circuit d'interface (CI) est relié à l'automate programmable (AP) par deux sorties complémentées permettant à l'automate programmable (AP) de vérifier le fonctionnement correct du circuit d'interface (CI) et la conformité du câblage.

18. Utilisation des moyens de contrôle de la hauteur d'un cordon de colle tels que définis dans l'une quelconque des revendications 4 à 17 dans un dispositif de contrôle de la hauteur d'un cordon de colle sur un panneau, tel qu'une vitre de véhicule automobile.

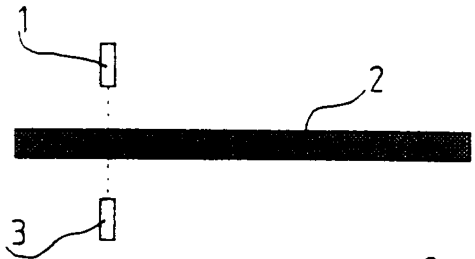


Fig. 1

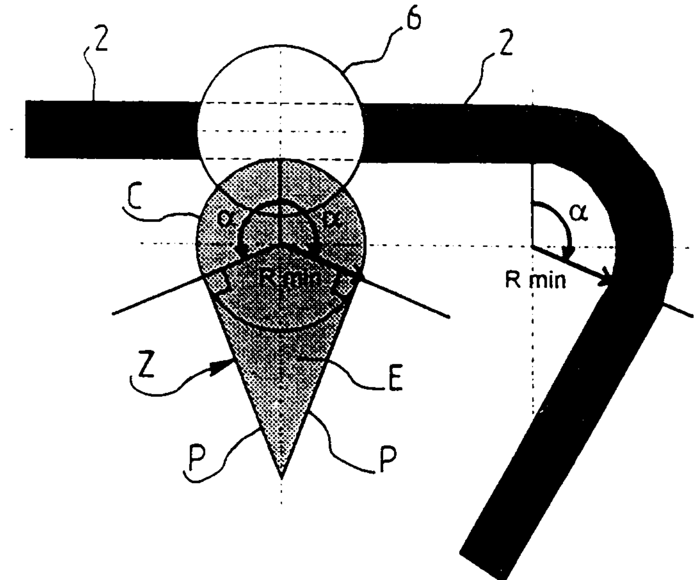


Fig. 2

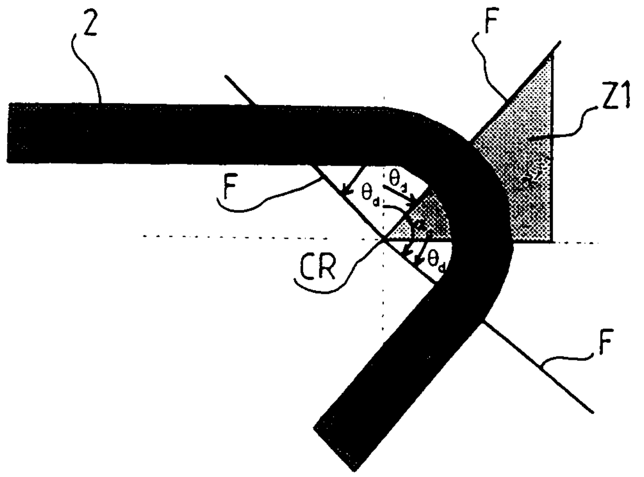


Fig. 3

Fig. 5

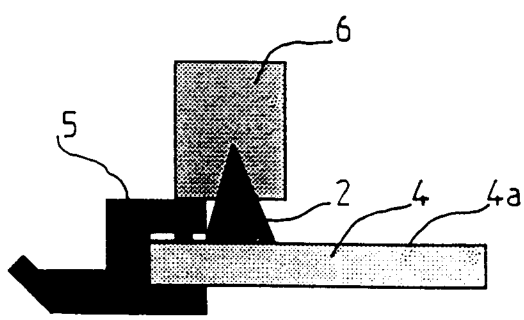


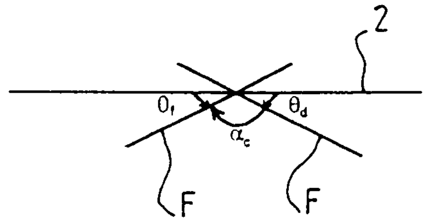


Fig. 4

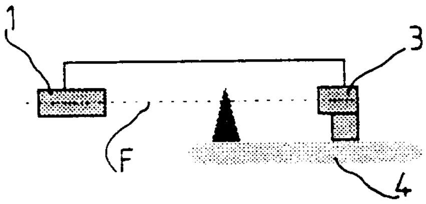


Fig. 6A

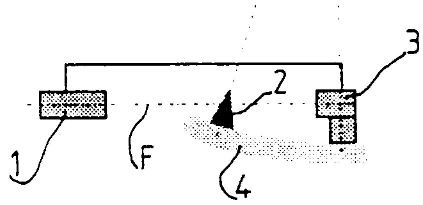


Fig. 6B

Fig. 7

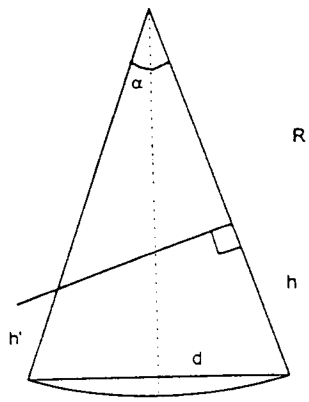


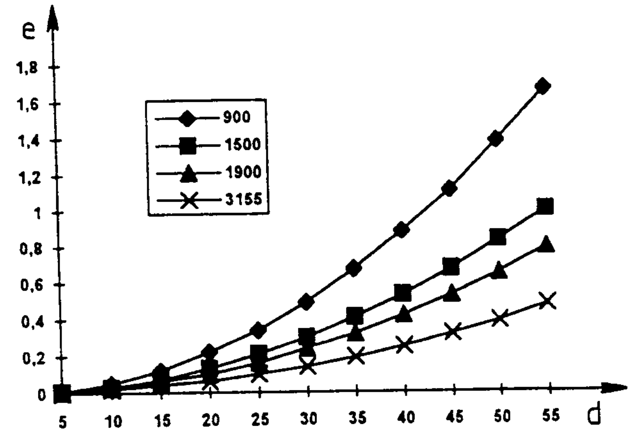


Fig. 8

Fig. 9

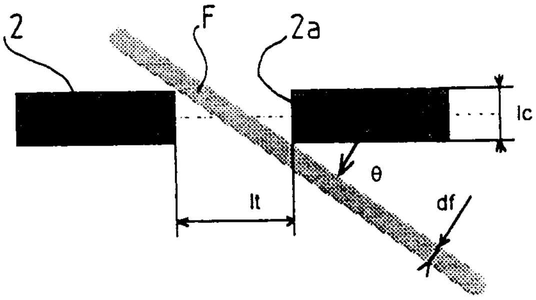


Fig. 10

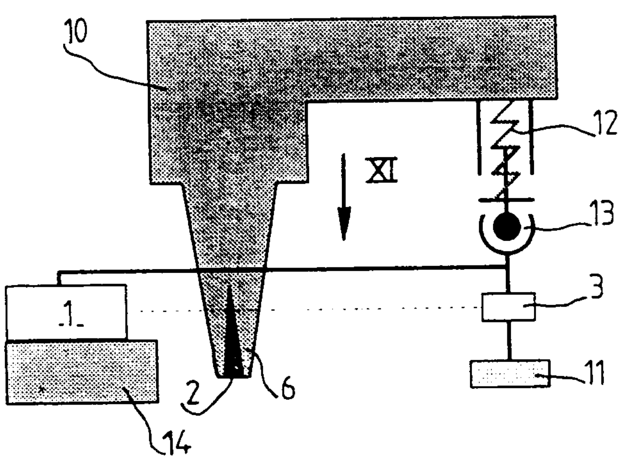


Fig. 11

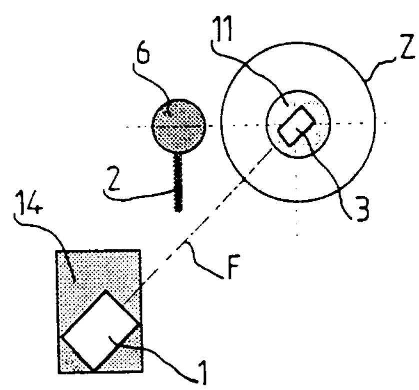

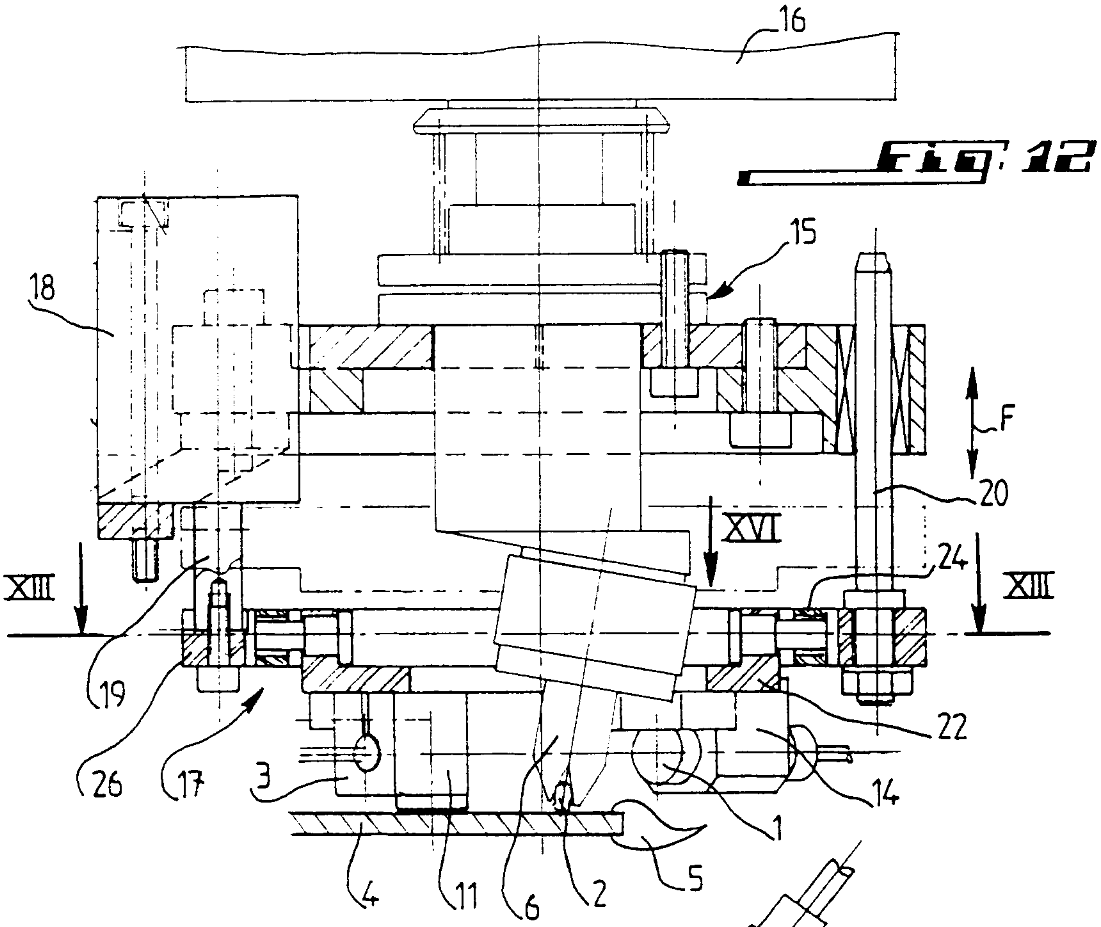
16
15
18
F
20
XVI
24
XIII
XIII
19
26
17
3
22
14
1
4
11
6
2
5

Fig. 12

Fig. 13

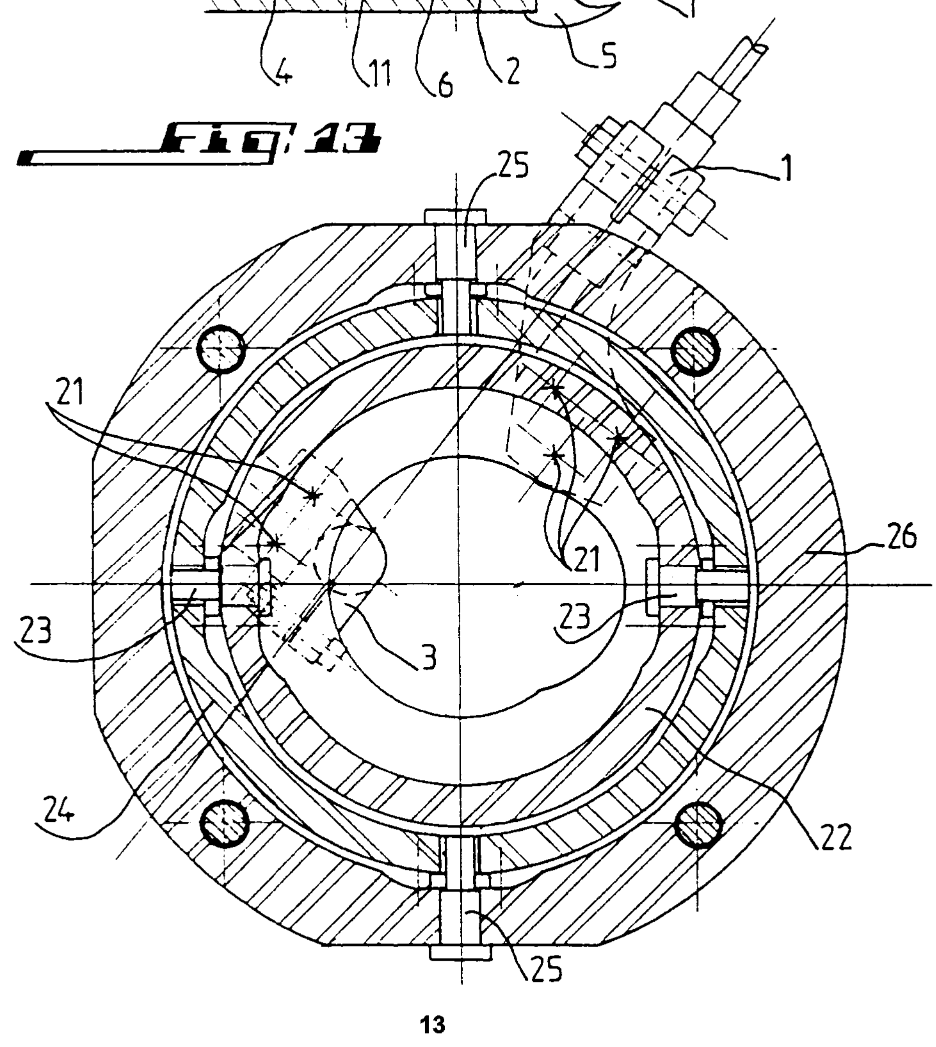
25
1
21
21
26
23
23
3
24
22
25

Fig. 14

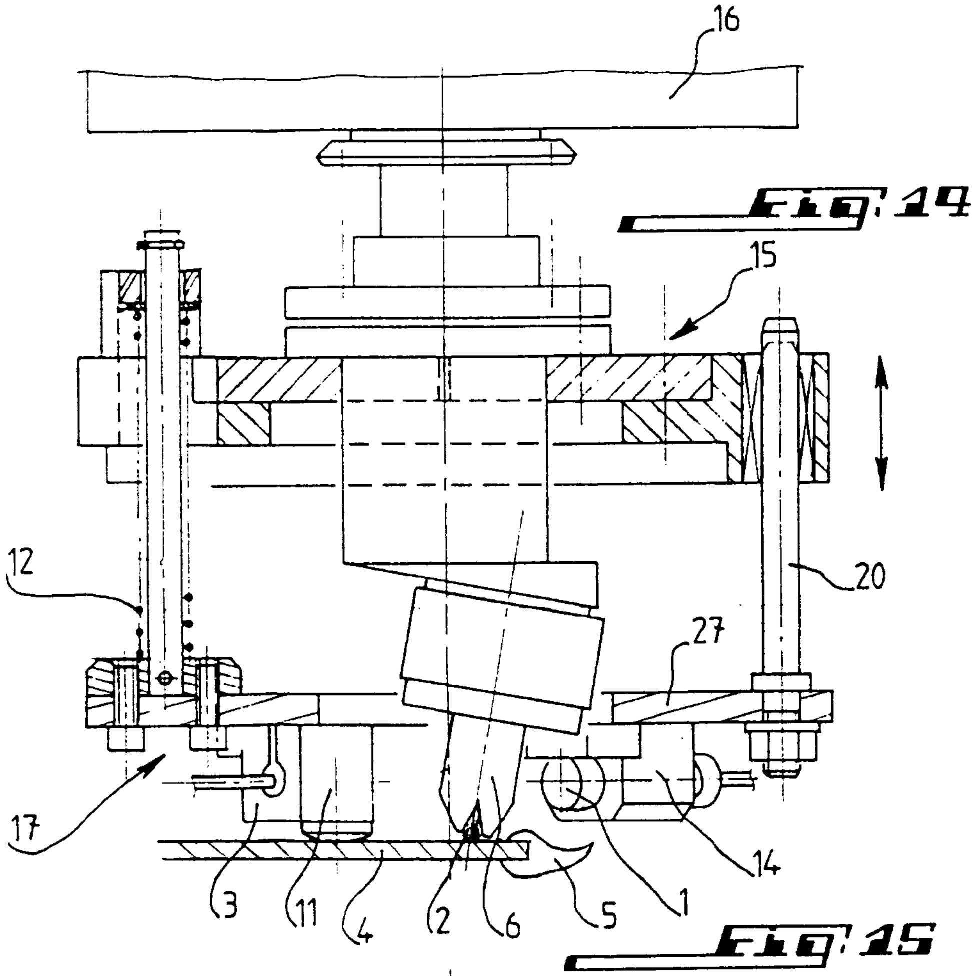


Fig. 15

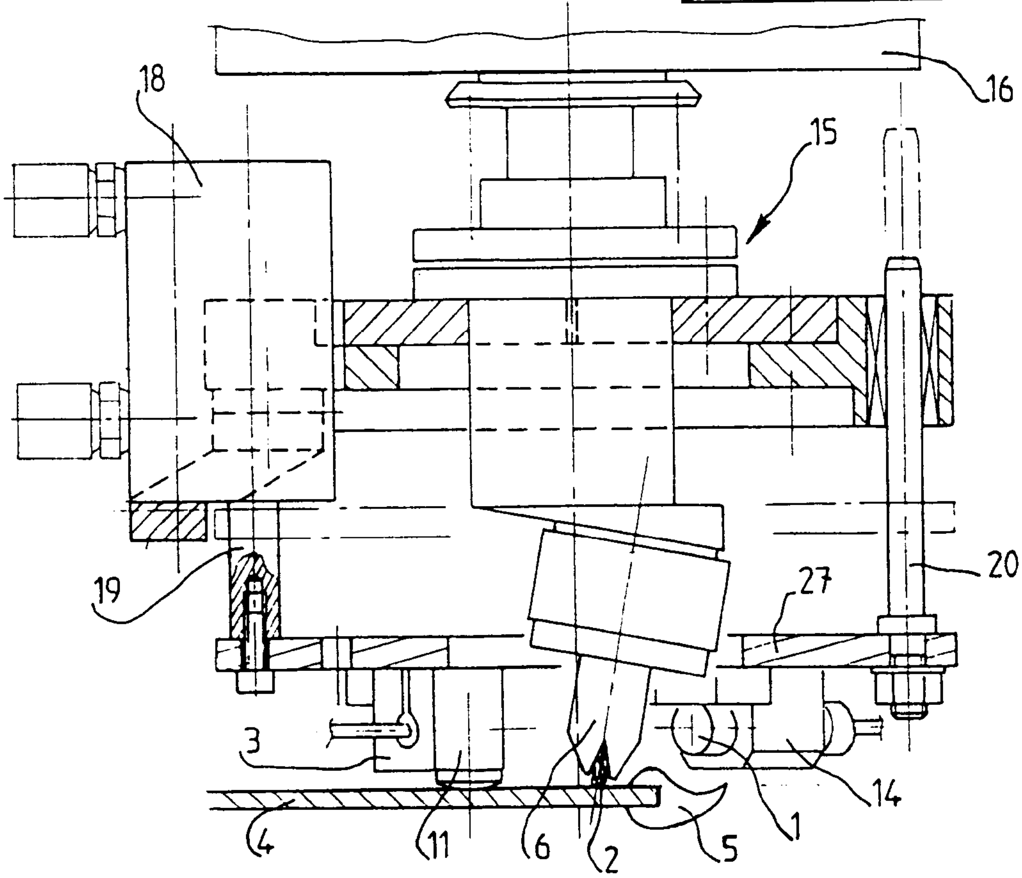

Fig 18

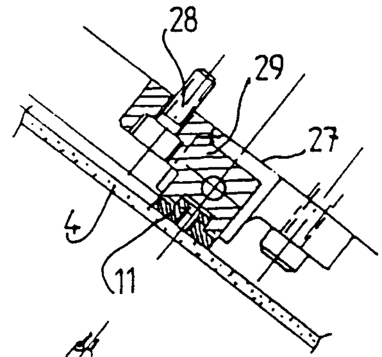


Fig 17

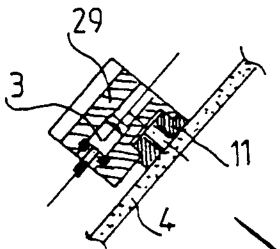


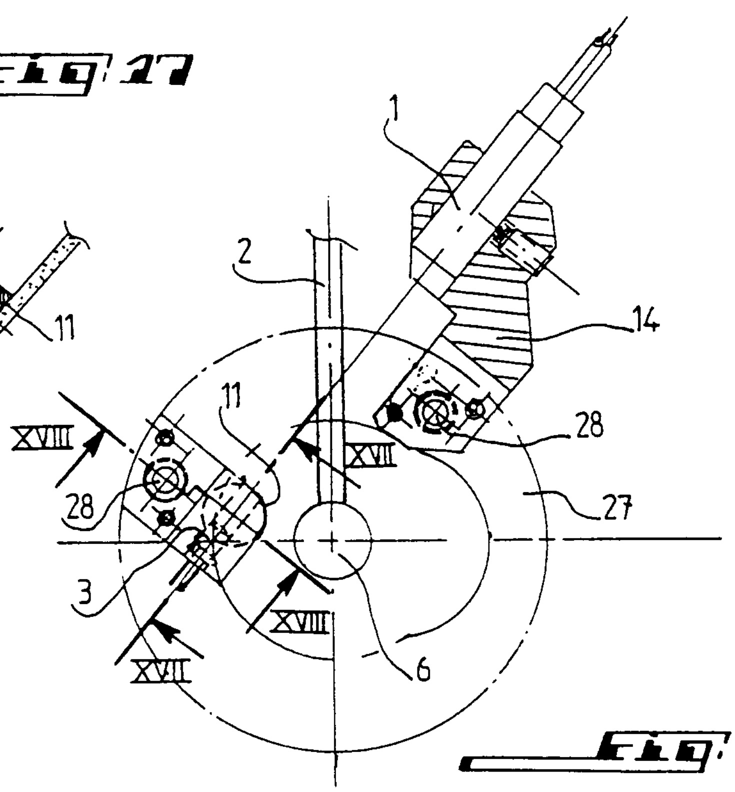


Fig 16

Fig 19

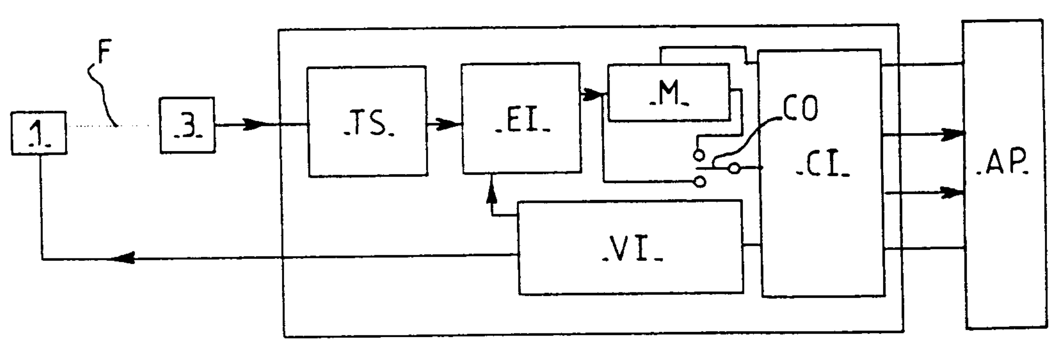

Office européen des brevets

# RAPPORT DE RECHERCHE EUROPEENNE

Numero de la demande
EP 95 40 1253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 599 126 (NORDSON CORP.)<br>* titre *<br>* colonne 4, ligne 3 - colonne 6, ligne 42; figure 1 *<br>* colonne 7, ligne 39 - colonne 8, ligne 27; figure 3 *<br>* colonne 8, ligne 48 - colonne 12, ligne 10; figures 4-6 *<br>--- | 1-5,18 | G01B11/02<br>B60J1/00<br>B05C5/02 |
| X | PATENT ABSTRACTS OF JAPAN<br>vol. 12 no. 76 (P-675) ,10 Mars 1988<br>& JP-A-62 215806 (KOMATSU MASANOBU) 22 Septembre 1987,<br>* abrégé *<br>----- | 1-4 | |

| DOMAINES TECHNIQUES RECHERCHES (Int.Cl.6) |
|---|
| G01B<br>G01D<br>B60J<br>G05D<br>B05C |

Le présent rapport a été établi pour toutes les revendications

| Lieu de la recherche | Date d'achèvement de la recherche | Examinateur |
|---|---|---|
| LA HAYE | 26 Septembre 1995 | Visser, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)